Europäisches Patentamt

European Patent Office

Office européen des brevets

(11) Numéro de publication: **0 118 357**
**B1**

# FASCICULE DE BREVET EUROPEEN

(45) Date de publication du fascicule du brevet:
**03.06.87**

(21) Numéro de dépôt: **84400396.2**

(22) Date de dépôt: **28.02.84**

(51) Int. Cl.⁴: **H 04 B 7/10,** H 04 B 7/26,
H 04 J 1/04, H 04 Q 7/00

(54) **Système d'antenne électronique pour réseau cellulaire de radiotéléphones associant des stations fixes à des postes mobiles et à des postes portatifs.**

(30) Priorité: **07.03.83 FR 8303700**

(43) Date de publication de la demande:
**12.09.84 Bulletin 84/37**

(45) Mention de la délivrance du brevet:
**03.06.87 Bulletin 87/23**

(84) Etats contractants désignés:
**DE GB**

(56) Documents cités:
**DE - A - 2 657 591**
**DE - A - 2 815 670**
**FR - A - 2 140 641**
**US - A - 2 631 238**
**US - A - 3 453 622**

(73) Titulaire: **THOMSON-CSF, 173, Boulevard Haussmann,
F-75379 Paris Cedex 08 (FR)**

(72) Inventeur: **Couet, Jacques, THOMSON-CSF
SCPI 173, bld Haussmann, F-75379 Paris Cedex 08 (FR)**

(74) Mandataire: **Weinmiller, Jürgen et al,
Lennéstrasse 9 Postfach 24, D-8133 Feldafing (DE)**

ACTORUM AG

## Description

L'invention se rapporte aux réseaux cellulaires de radiotéléphones associant des stations fixes à des postes mobiles et à des postes portatitfs. Un réseau de radiotéléphones est destiné à relier des postes mobiles ou portatifs soit entre eux, soit au réseau téléphonique général, en passant par l'intermédiaire d'un réseau de stations fixes interconnectées par une structure de câbles. Dans ces cas, les liaisons à grande distance sont avantageusement obtenues en effectuant la plus grande partie du trajet dans le réseau général, la liaison radio avec le mobile étant assurée par la station fixe qui en est la plus proche. Cela conduit à la conception de systèmes dits cellulaires où chaque station fixe, équipée de plusieurs émetteurs-récepteurs, dessert une zone géographique limitée appelée cellule. La zone couverte dépend de la puissance des émetteurs. L'ensemble du trafic collecté par les stations fixes est regroupé par le réseau de câbles qui permet de raccorder un mobile au réseau général quelle que soit la cellule dans laquelle il se trouve.

Pour les réseaux comportant des postes portatifs, des problèmes importants sont liés d'une part à la faible portée de ces postes portatifs, due au faible rendement des antennes qui leur sont associées par rapport à celui des antennes montées sur véhicules mobiles, et d'autre part au déséquilibre des liaisons du à la faible puissance rayonnée par un poste portatif comparée à la puissance rayonnée par l'antenne émettrice d'une station centrale.

Des solutions ont étét proposées pour résoudre au moins partiellement ces problèmes.

Tout d'abord, au lieu d'utilisier en réception dans les stations fixes une seule antenne, omnidirectionnelle, on utilise deux antennes décorrellées, un traitement des deux signaux reçus en diversité étant alors réalisé dans une chaine de réception double. Ce traitement en diversité permet de minimiser les évanouissements créés par des réflections parsites (phénomène connu dans la littérature sous le nom «Fading de Reyleigh»); ce phénomène est donc atténué, ce qui permet d'améliorer le rapport signal à bruit pour un niveau moyen de champ reçu déterminé de 3 à 5 dB. Ce système donne ses meilleurs résultats lorsque les puissances moyennes reçues sur les deux antennes de réception sont égales. En effet, dans ce cas l'une et l'autre antenne sont successivement sélectionnées, en fonction de l'amplitude des signaux qu'elles reçoivent.

D'autres solutions ont été apportées. En particulier, dans le système «DYNA T.A.C.» der MOTOROLA mis en œuvre à Baltimore, il a été prévu d'équiper les stations d'une pluralité d'antennes directives à grand gain en réception, six par exemple pour couvrir l'ensemble des directions. Dans ce cas un système de commutation automatique sélectionne les deux meilleures antennes pour le traitement de «diversité» ultérieur, et, à tout instant le système sélectionne l'antenne qui fournit le signal de plus haut niveau, comme dans la solution indiquée ci-dessus. Un tel système avec des antennes réception à grand gain, permet d'obtenir un gain supplémentaire de 6 dB au moins, mais n'offre en fait qu'un faible rendement de «diversité» par le fait que les deux antennes sélectionnées ne sont pas pointées dans la même direction et qu'en conséquence l'une des antennes reçoit généralement un signal moyen de 5 à 10 dB inférieur à l'autre.

Enfin, un autre type d'amélioration du gain de ces liaison peut être obtenu en gagnant sur le facteur de bruit dans les stations, par exemple en utilisant des câbles de descente de l'antenne de réception aux circuits de traitement ayant de très faibles pertes. En effet chaque décibel perdu dans le câble est directement ajouté au bruit. Ces câbles sont très coûteux. De plus, lorsque le système d'antennes est formé de plusieurs antennes directionnelles, par exemples six comme indiqué ci-dessus, il est nécessaire d'avoir six câbles de descente. Enfin ces câbles nécessitent souvent une pressurisation. Ce type d'amélioration conduit donc à des systèmes très coûteux.

Une autre solution pour gagner sur le facteur de bruit cinsiste à utiliser des pré-amplificateurs montés à proximité immédiate des antennes réception et suivis par des câbles éventuellement de moins bonne qualité (car alors les pertes du câble ne sont plus directement ajoutées au bruit total mais divisées par le gain du pré-amplificateur). Mais cette solution est encore chère, surtout lorsqu'on utilise plusieurs antennes directionnelles.

Le document DE-A-2 815 670 décrit un système d'antenne selon le préambule de la revendication 1. Les différents éléments de l'antenne sont disposés les uns à côté des autres de façon à recevoir, selon un secteur donné du plan horizontal des signaux provenant d'émetteur éloignés.

Un système de balayage permet de coupler séquentiellement chacun de ces éléments à un récepteur.

Dans un premier mode de fonctionnement chaque secteur est balayé, avec une comparaison du niveau reçu à un niveau de référence.

Lorsque le niveau maximum est supérieur à ce niveau de référence, on passe dans un second mode pendant lequel le balayage des différents secteurs continue pendant un certain temps, après quoi on passe dans un troisième mode pendant lequel le balayage est limité à certains secteurs qui ont été sélectionnés.

A la fin d'un certain intervalle de temps le balayage est interrompu et le récepteur est couplé au secteur qui présente le niveau de signal relatif le plus fort.

L'invention a pour but de proposer un système d'antenne électronique pour réseau cellulaire de radiotéléphones dans lequel le déséquilibre des liaison radio est corrigé, le réseau ne nécessitant qu'une puissance rayonnée par les postes portatifs faible. De plus, ce système se contente de câbles de descente dans la chaîne de réception des stations fixes ayant une qualité moyenne.

Ce but est atteint selon l'invention par le système d'antenne tel qu'il est caractérisé par la revendication 1. En ce qui concerne des mises en œuvre préférées de l'invention, référence est faite aux revendications dépendantes.

L'invention sera mieux comprise à l'aide de la description qui suit en référence aux figures annexées.

La figure 1 représente schématiquement une cellule d'un système cellulaire de radiotéléphones.

La figure 2 représente le diagramme des antennes d'un système d'antennes de réception d'une station fixe, dans le réseau cellulaire de radiotéléphones suivant l'invention.

La figure 3 est un diagramme des signaux reçus par deux antennes fonctionnant en diversité.

Les figures 4 et 5 sont des diagrammes explicatifs du fonctionnement des circuits de traitement d'une station fixe du réseau suivant l'invention.

La figure 6 est un schéma synoptique de l'ensemble des circuits situé à proximité des antennes d'une station fixe du réseau suivant l'invention.

La figure 7 est le schéma d'un mode de réalisation des circuits de combinaison 10 représentés sur la figure 6.

La figure 8 est un schéma synoptique des circuits de traitement en réception, d'une station fixe du réseau.

Le système suivant l'invention fonctionne en diversité complète et réelle avec plusieurs paires d'antennes directionnelles de réception à grand gain. Pour cela il met en œuvre un procédé de multiplexage en fréquence pour mélanger tous les signaux radiofréquences reçus par les différentes antennes, et les transmettre par un seul câble de descente, éventuellement deux, à la station de réception.

La station utilise une bande de fréquences basses pour transporter les signaux radio, des circuits situés à proximité des antennes aux circuits de traitement en réception, dans le but de diminuer les pertes à l'intérieur du câble de transmission. Enfin, pour traiter le signal multiplexé, la station comporte un démultiplexeur et un système de sélection en réception particulier.

Ainsi, on combine les avantages résultant du gain lié à un fonctionnement en diversité aux avantages liés à la directivité, ce qui permet d'obtenir un gain de 5 à plus de 10 dB par rapport aux systèmes connus, tout en permettant une compensation du déséquilibre des liaisons avec les postes portatifs.

De plus, du fait que les signaux radio sont transposés à des fréquences inférieures aux fréquences reçues pour leur transmission par un seul câble, à partir de plusieurs antennes, le prix de l'ensemble reste compétitif.

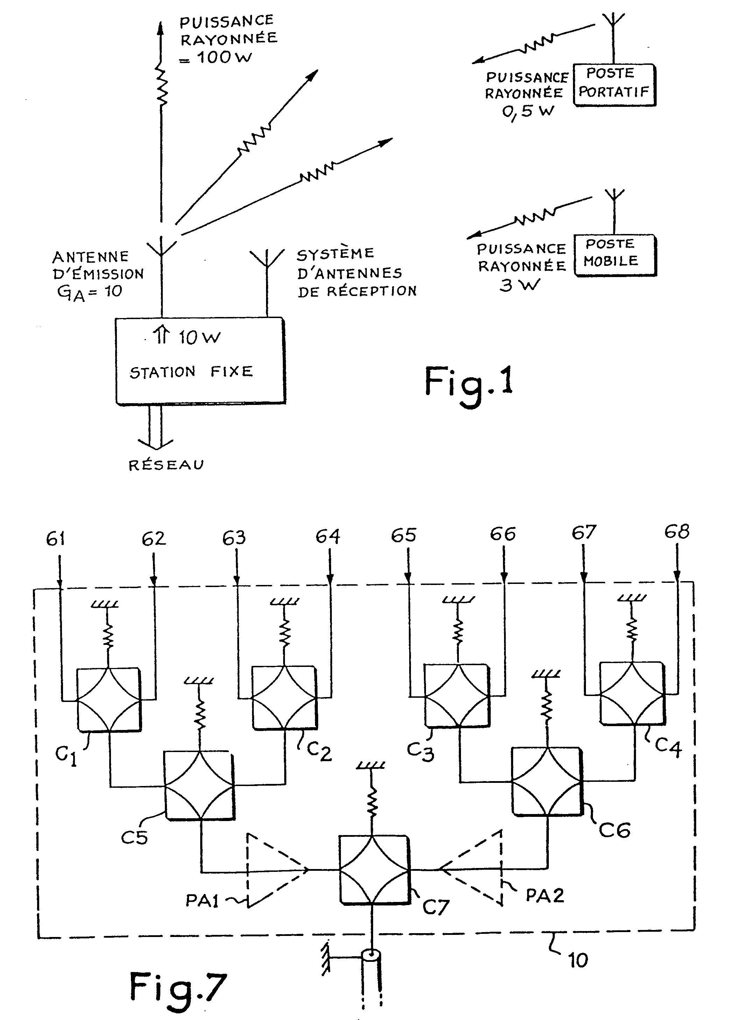

La figure 1 représente partiellement et schématiquement une cellule d'un réseau cellulaire de radiotéléphones. Chaque cellule comporte une station fixe, reliée par câbles à d'autres stations fixes ou à un central, constituant un réseau fixe, et un ensemble de postes mobiles et de postes portatifs qui, à un instant donné, sont dans le ressort géographique de la station fixe. Une telle station comporte un système d'antennes de réception et au moins une antenne d'émission pour la réception et l'émission de la puissance radioélectrique provenant ou à destination des postes mobiles ou portatifs. Par exemple, à partir d'une puissance d'émission de 10 watts, une antenne d'émission de gain $G_A = 10\,dB$, rayonne 100 watts de puissance effective. La liaison radio s'effectue entre cette station et un mobile par l'intermédiaire d'une antenne d'émission réception susceptible de rayonner dans le cas d'un mobile une puissance effective de l'ordre de 3 Watts et dans le cas d'un poste portatif une puissance de l'ordre de 0,5 Watt; il y a donc un grand déséquilibre entre les deux chemins radio, d'une part de la station fixe à un mobile ou à un poste portatif et d'autre part du mobile ou du poste portatif à la station fixe.

Le système d'antenne électronique suivant l'invention comporte dans chaque station de base un système d'antennes de réception particulier associé à des circuits de traitement qui permettent de diminuer les inconvénients résultant de ce déséquilibre.

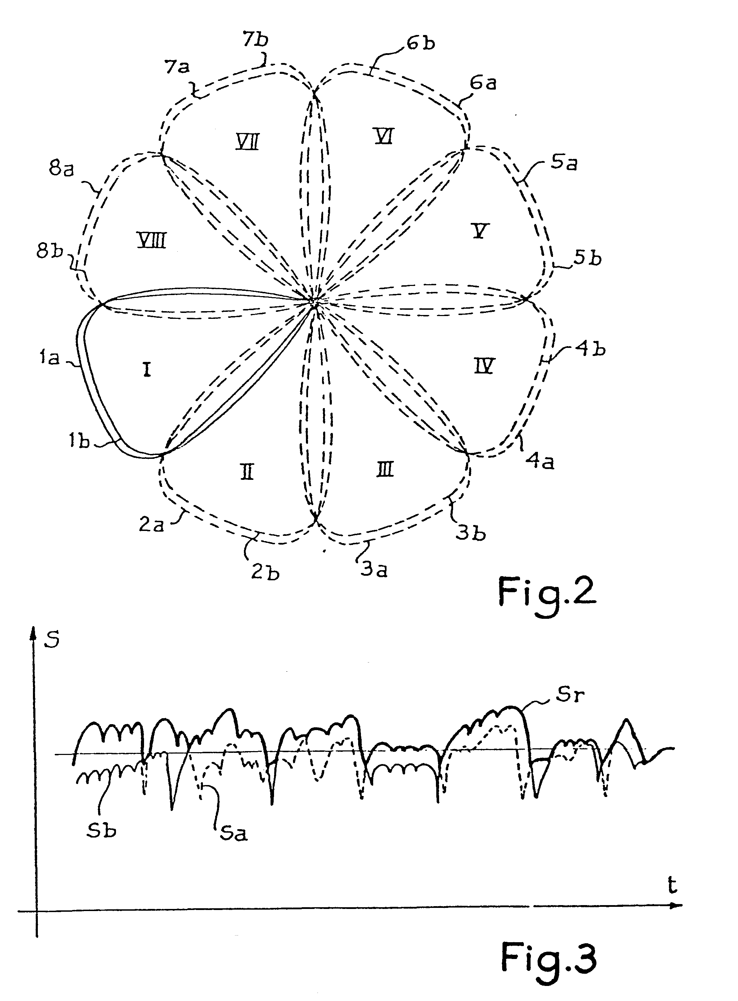

La figure 2 représente un diagramme de rayonnement d'un système d'antennes de réception d'une station fixe suivant l'invention. Tout d'abord, le système d'antennes comporte, pour couvrir l'ensemble des directions dans l'espace, non pas une antenne omnidirectionnelle mais plusieurs antennes directionnelles dont les lobes sont adjacents. Dans l'exemple représente sur la figure 2, huit secteurs sont ainsi définis, I, II, ... VIII. Dans chaque secteur une paire d'antennes travaille en diversité réelle, leurs lobes étant superposés. Soient $1_a 1_b$, $2_a 2_b$ ..., $8_a 8_b$, les lobes définis par les différentes paires d'antennes du système d'antennes.

Dans un secteur donné les signaux $S_a$ et $S_b$ reçus par les deux antennes en diversité ont normalement la même valeur moyenne. Des exemples de ces signaux sont représentés en fonction de temps sur la figure 3. A tout instant, il est possible, pour améliorer le gain, de choisir entre ces deux signaux celui dont l'amplitude et la plus élevée. Soit $S_r$ le signal résultant. Cette sélection est effectuée dans les circuits de traitement de la station fixe, après les circuits de réception, comme il sera indiqué dans la suite.

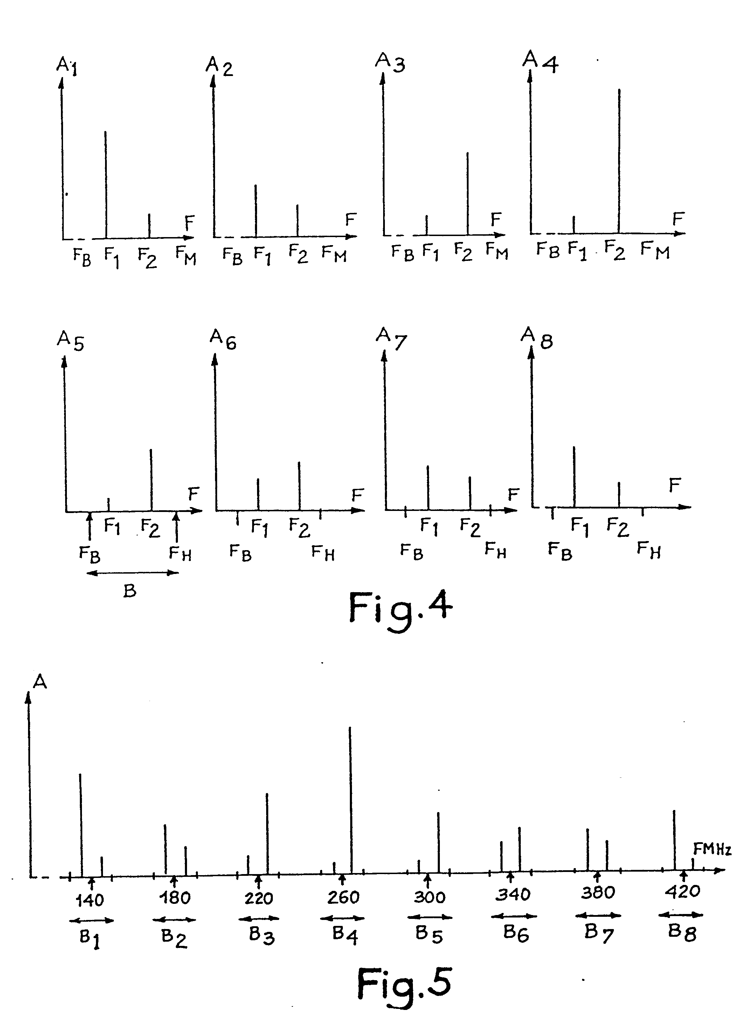

Par ailleurs, lorsqu'un mobile ou un poste portatif émet une puissance radioélectrique, les antennes des différents secteurs reçoivent les signaux correspondant à cette puissance émise par un poste mobile ou portatif. L'amplitude $A_i$ (i = 1 à 8) des signaux reçus des antennes de ces différents secteurs varie, l'amplitude étant maximum pour les antennes pointées dans la direction du mobile ou du poste portatif correspondant. A titre d'exemple, la figure 4 représente les diagrammes des signaux reçus par les antennes des différents secteurs. Pour simplifier, les signaux sont représentés par leur valeur moyenne et sont donc les mêmes pour les deux antennes couvrant le même secteur. Il a été supposé qu'à l'instant considéré deux mobiles ou postes portatifs émettaient dans le ressort de la station fixe considérée. Ces deux postes émettent sur deux fréquences différents $F_1$ et $F_2$ dans la bande $F_BF_H$ de transmission autour de 850 MHz. L'amplitude des raies à ces fréquences $F_1$ et $F_2$ varie donc suivant les secteurs couverts par les différentes antennes. A titre d'exemple, la raie à la fréquence $F_1$ a été représentée maximum, $A_1$ pour les antennes correspondant au secteur 1, la raie à la fréquence $F_2$ étant maximum dans le secteur IV, $A_4$. Dans les autres secteurs, les raies aux fréquences $F_1$ et $F_2$ sont plus faibles et minimales dans les secteurs pointés dans la direction opposée c'est-à-dire dans les secteurs V et VIII respectivement.

Dans le système suivant l'invention, les signaux reçus des différentes antennes sont transposés à fréquence plus basse, et dans des bandes de fréquences séparées. La figure 5 représente un exemple de transposition possible des différents signaux reçus par les antennes, représentés sur la figure 4. Si $B = F_H-F_B$, cette bande B est transposée respectivement dans les bandes $B_1$, $B_2$ etc. ... $B_8$ pour chacun des huit signaux reçus par les antennes des huit secteurs. Les valeurs numériques suivantes peuvent être retenues: Si les signaux reçus dans la bande 850 MHz et ont une bande B = 20 MHz, les huit signaux provenant des 8 antennes $1_a$, $2_a$ ... $8_a$ peuvent être transposés aux fréquences $100\,MHz + i \times 40\,MHz$, i variant de 1 à 8 et représentant le numéro du secteur considéré. Ainsi, une séparation de 20 MHz est obtenue entre les bandes de 20 MHz transposées. De même les signaux provenant des 8 antennes $1_b$, $2_b$ ... $8_b$ sont également transposés, par exemple respectivement aux mêmes fréquences que les signaux provenant des antennes $1_a$, $2_a$ ... $8_a$. Le signal issu d'une antenne du secteur 1 est ainsi transposé autour de la fréquence 140 MHz, le signal issu d'une antenne du secteur II autour de la fréquence 180 MHz etc..., le signal reçu d'une antenne du secteur VIII étant transposée autour de la fréquence 420 MHz. Les huits signaux des antennes d'indice a peuvent alors être combinés et transmis par l'intermédiaire d'une seule liaison, puisque leurs bandes de fréquence sont séparées. De même les huit signaux provenant des antennes d'indice b peuvent également être combinés et transmis par un second câble de liaison. Après leur transmission aux circuits de traitement, les signaux combinés peuvent être séparés.

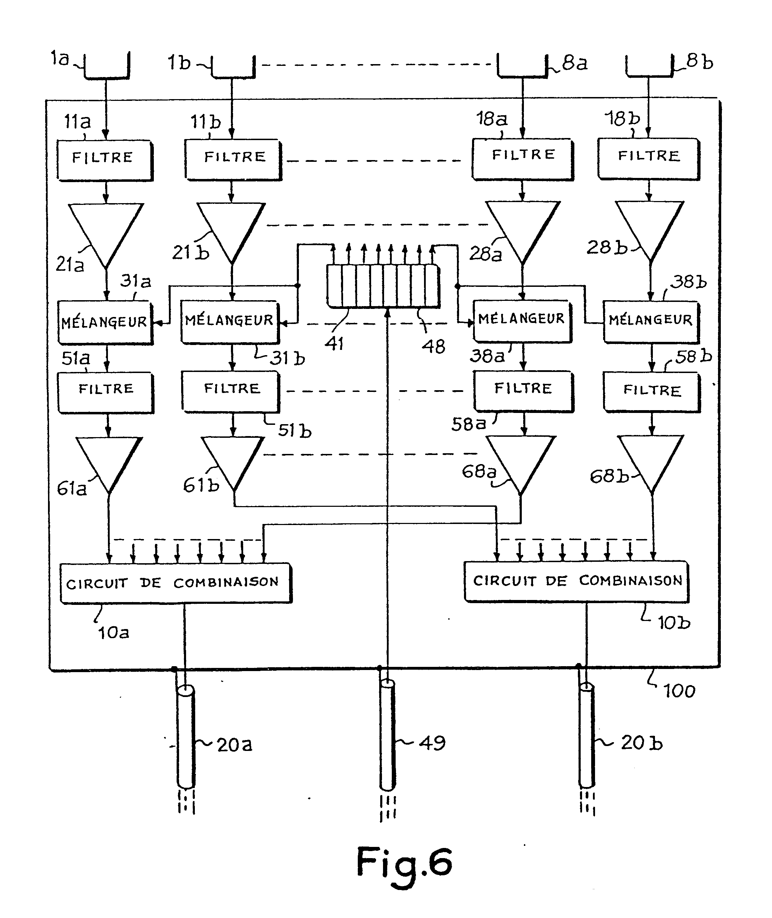

La figure 6 représente partiellement le schéma des circuits situés au voisinage des antennes dans le système d'antenne électronique suivant l'invention.

Les signaux reçus par les antennes $1_a$ $1_b$, $2_a$ $2_b$ etc. ... $8_a$ $8_b$ sont appliqués à l'entrée de filtres de bande, respectivement $11_a$ $11_b$, $12_a$ $12_b$ etc. ... $18_a$ $18_b$, les sorties de ces filtres étant reliées à des amplificateurs $21_a$ $21_b$, etc. ... $28_a$ $28_b$ respectivement. Les filtres de bande couvrent l'ensemble de la bande radio B, 20 MHz par exemple, et éliminent les composantes en dehors de cette bande. Les préamplificateurs $21_a$ ... $28_b$ sont des préamplificateurs radiofréquence à faible bruit, qui ont un gain de l'ordre de 10 bB au moins, et moins de 3 à 4 dB de facteur de bruit. Les signaux issus de ces amplificateurs sont appliqués aux premières entrées de mélangeurs, $31_a$ $31_b$, ... $38_a$ $38_b$, qui mélangent le signal radiofréquence reçu avec un signal d'oscillation locale qui permet de transposer les signaux radiofréquence à des fréquences plus basses, dans des bandes séparées. Pour obtenir le diagramme de fréquence représenté sur la figure 5, les fréquences des oscillateurs locaux nécessaires pour la transposition sont successivement 710 MHz, 670 MHz, 630 MHz ... etc. 430 MHz avec un mélangeur infrarouge ou 990 ... 1030, 1070 ... avec un mélangeur supradyne. Dans le mode de réalisation représenté, il a été supposé que deux câbles de descente étaient utilisés, chacun d'entre eux transmettant les signaux multiplexés provenant d'un ensemble d'antennes $1_a$, $2_a$ ... $8_a$, et l'autre transmettant le signal multiplexé provenant des antennes $1_b$, $2_b$ etc. ... $8_b$. Ce mode de réalisation permet d'utiliser la même fréquence d'oscillation locale pour la transposition des deux signaux provenant des deux antennes couvrant le même secteur. Cette disposition n'est pas limitative en particulier il serait possible d'utiliser un seul câble de descente, jusqu'aux circuits de traitement en réception en réalisant un multiplexage de l'ensemble des signaux provenant de toutes les antennes; il faudrait pour cela utiliser 16 fréquences différentes de transposition et transmettre les 16 signaux dans des bandes qui ne se recouvrent pas.

En pratique le générateur d'oscillation locale multiple est placé dans les circuits de traitement, et les signaux d'oscillation locale sont combinés et transmis aux circuits associés aux antennes par l'intermédiaire d'un câble unique. En conséquence, les circuits situés au voisinage des antennes comportent autant de filtres 41, 42 ... 48 qu'il y a de fréquences d'oscillation locale, ces filtres étant tous alimentés par la liaison unique 49, et délivrant aux secondes entrées des mélangeurs $31_a$ $31_b$ ... $38_a$ $38_b$, les signaux d'oscillation locale correspondants. Il est également possible de transmettre les signaux d'oscillation par les câbles 20a et 20b ou par l'un de ces deux câbles, surtout dans le cas de mélangeurs supradyne où les fréquences d'oscillation locale ne sont pas dans la bande du signal multiplexé. Les sorties des mélangeurs sont reliées aux entrées de filtres de bande centrés respectivement sur les fréquences 140, 180, 220 etc. ... 420 MHz. Les sorties de ces filtres sont reliés à des amplificateurs $61_a$ $61_b$ ... $68_a$ $68_b$. Les sorties des amplificateurs $61_a$ ... $68_a$ sont reliées aux entrées d'un circuit de combinaison $10_a$, les sorties des amplificateurs $61_b$ $68_b$ étant reliées à l'entrée d'un second circuit de combinaison $10_b$. La sortie du circuit de combinaison $10_a$ est reliée à un premier câble de descente $20_a$, la sortie du circuit de combinaison $10_b$ étant reliée à un second câble de descente $20_b$. L'ensemble des circuits décrits ci-dessus est situé à proximité du système d'antennes de réception et forme donc un ensemble de circuits 100 directement associé à ces antennes. Cet ensemble 100 permet d'amener les signaux provenant des différentes antennes jusqu'à un ensemble de circuits de réception décrit ci-après, par l'intermédiaire d'un nombre réduit de câbles dont la qualité peut être tout-à-fait courante. Il faut noter d'ailleurs que dans ces circuits associés à l'antenne de réception, la disposition des éléments dans chacune des chaines de réception peut être différente de celle proposée. En particulier, un filtre et un amplificateur, par exemple 11 et 21 d'une part ou 51 et 61 d'autre part, peuvent être intervertis.

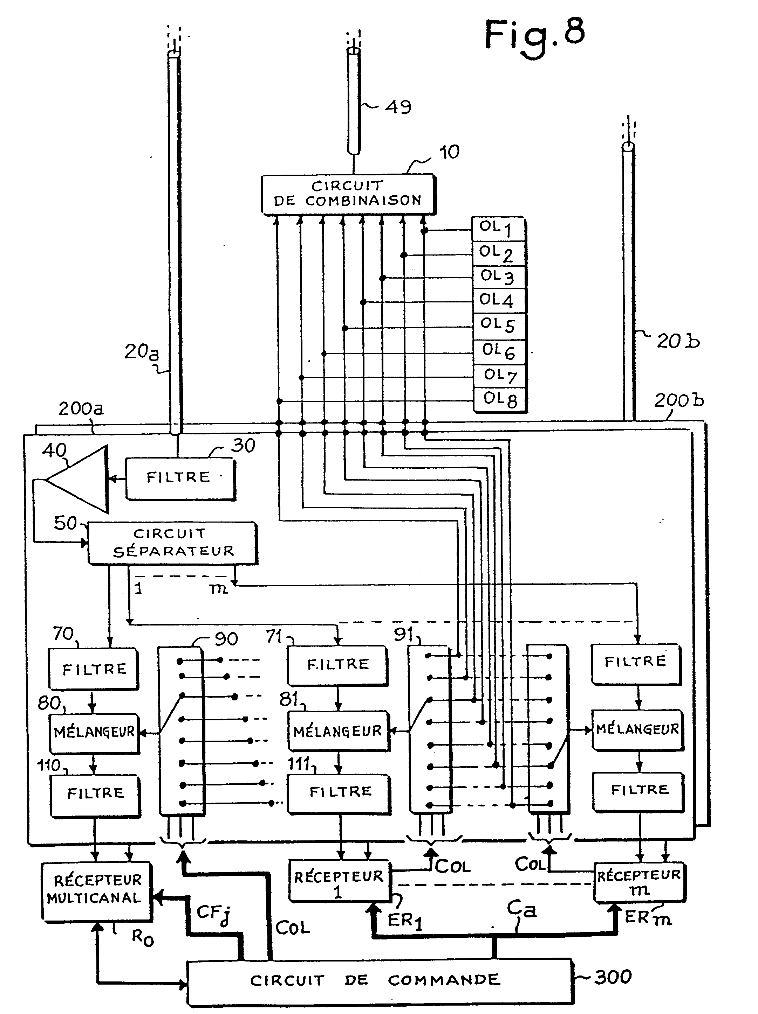

Les circuits de combinaison $10_a$ et $10_b$ peuvent être composés de coupleurs hybrides 3 dB selon le mode de réalisation représenté sur la figure 7. Suivant ce mode de réalisation connu, les entrées du circuit de combinaison sont associées deux à deux dans quatre coupleurs hybrides 3 dB, $C_1$, $C_2$, $C_3$ et $C_4$, deux sorties des deux coupleurs $C_1$ et $C_2$ étant reliées à deux entrées d'un coupleur $C_5$, tandis que deux sorties des coupleurs $C_3$ et $C_4$ sont reliées à deux entrées d'un autre coupleur $C_6$. Les sorties non utilisées sont fermées sur des résistances de charge 50 ohms. Les sorties des deux coupleurs $C_5$ et $C_6$ sont reliées à deux entrées d'un coupleur $C_7$ de sortie, soit directement soit par l'intermédiaire de préamplificateur $PA_1$ et $PA_2$ en pointillés sur la figure. La sortie utile du coupleur $C_7$ forme la sortie du circuit de combinaison 10. Les préamplificateurs $PA_1$ et $PA_2$ sont surtout utiles lorsqu'un faible taux d'intermodulation est nécessaire car tous les préamplificateurs travaillent alors à gain réduit, ce qui nécessite d'augmenter le nombre des étages d'amplification. Par ailleurs, au lieu d'utiliser des coupleurs hybrides 3 dB, qui introduisent des pertes de 3 décibels à chaque étage, il est possible d'utiliser d'autres types de circuits de combinaison, par exemple des circuits de combinaison à filtres, plus difficiles à fabriquer mais qui offrent moins de pertes d'insertion.

La figure 8 représente schématiquement les circuits situés dans la station, au bas de la tour d'antennes, et reliés aux câbles de descente $20_a$ et $20_b$.

Dans le mode de réalisation représenté, n oscillateurs locaux, $OL_1 \ldots OL_n$ sont utilisés pour générer les fréquences utilisées aussi bien dans le multiplexeur que dans le démultiplexeur. De ce fait, il n'est pas nécessaire que les oscillateurs correspondants aient une grande stabilité; en conséquence il est possible d'utiliser des oscillateurs à quartz standards. Pour leur transmission via le câble unique, 49, vers les antennes de réception, les signaux d'oscillation locale sont combinés dans un circuit de combinaison 10 analogue aux circuits de combinaison $10_a$ et $10_b$ des circuits associés aux antennes de réception.

Les circuits de traitement, qui permettent d'aiguiller les signaux vers les différents émetteurs récepteurs de la station sont constitués et connectés de la manière suivante: les signaux transmis par l'intermédiaire des câbles $20_a$ et $20_b$ sont appliqués aux entrées de deux circuits semblables de démultiplexage et de transposition $200_a$ et $200_b$ dont l'un est représenté en détails. Il comporte un filtre 30, dont la sortie est reliée à un amplificateur 40 ayant sa sortie reliée à l'entrée d'un circuit séparateur 50 comportant, dans le mode de réalisation représenté, m + l sorties, si m est le nombre d'émetteurs récepteurs dans la station. La bande passante du filtre 30 permet de transmettre le signal complet, c'est-à-dire que cette bande passante est au moins égale à la bande du signal multiplexé, soit 300 MHz environ autour d'une fréquence centrale de l'ordre de 300 MHz dans l'exemple numérique indiqué ci-dessus. Le circuit séparateur 50 est constitué, de manière classique, d'une suite de répartiteurs de puissance. Chaque sortie du circuit séparateur est reliée à un circuit de sélection qui comporte en série un filtre respectivement 70, 71, 72 ... , la sortie de chacun de ces filtres étant reliée à l'entrée d'un mélangeur associé respectivement 80, 81, 82 ... dont la seconde entrée peut être reliée à l'une des sorties des oscillateurs locaux $OL_i$, $i = 1$ à 8, par l'intermédiaire d'un commutateur respectivement 90, 91, 92 ... à huit positions, commandable, permettant de choisir une fréquence parmi les huit délivrées par les oscillateurs locaux. Ces commutateurs 90, 91, 92 ... sont commandés par un signal numérique de trois bits commandé à partir d'un circuit de commande 300. Les sorties des mélangeurs 80, 81, 82, ... sont reliées aux entrées de filtres de bande, respectivement 110, 111, 112 ... Les filtres 70, 71, 72 ... sont prévus pour éviter qu'un signal d'oscillation locale soit transmis vers le circuit séparateur 50 à partir du mélangeur correspondant. Si les fréquences d'oscillation locale utilisées dans les mélangeurs sont les mêmes que celles utilisées dans les mélangeurs associés aux antennes de réception pour le multiplexage, les filtres 110, 111, 112 ... sont centrés sur la bande radio initiale et ont une bande de 20 MHZ. Ils permettent alors de restituer les signaux reçus par les antennes sélectionnées, la sélection étant réalisée par le choix de la fréquence de transposition appliquée aux mélangeurs.

Les sorties des m filtres 111, 112 ... sont reliées aux premières entrées des m émetteurs récepteurs de la station $ER_1$, $ER_2$ ... $ER_m$ qui ont également des secondes entrées reliées aux sorties des mêmes filtres du circuit $200_b$ de la seconde branche de diversité.

Par ailleurs la sortie du filtre 110 est reliée à l'entrée d'un circuit de sélection qui permet, par l'analyse des signaux reçus, de sélectionner le secteur permettant la meilleure réception sur un canal donné. Cette opération est réalisée en analysant pour chaque secteur la puissance moyenne reçue sur les différentes fréquences possibles de la station.

En fait ce circuit de sélection est un récepteur multicanal $R_o$ qui est associé au circuit 300 de commande de la station. Dans un mode de réalisation de l'invention, ce circuit de commande est un calculateur, modèle INTEL 8085 par exemple. Ce calculatur commande par sa sortie $C_{OL}$ le commutateur 90 pour balayer les oscillateurs locaux et appliquer au mélangeur associé, 80, les différentes fréquences $OL_i$ permettant de retransposer successivement les signaux issus des antennes déterminant les cellules dans leur bande initiale possibles, et cela pour chaque position du commutateur 90. Le récepteur multicanal $R_o$ comporte un circuit de mesure de la puissance reçue pour chaque bande élémentaire ainsi sélectionnée correspondant à la réception d'un canal de fréquence déterminée $F_j$ dans une cellule i.

Les mesures effectuées sont transmises au calculateur qui, à partir de plusieurs séries de mesures successives, détermine pour chaque canal de réception et donc pour l'émetteur récepteur $ER_j$ associé à ce canal, la cellule dans laquelle le signal $A_j$ à la fréquence $F_j$ est de plus fort niveau. Le calculateur fournit alors, sur un bus de commande des antennes $C_a$ relié à des entrées de commande des m émetteurs récepteurs $ER_j$, les informations nécessaires au positionnement des commutateurs. Chaque émetteur récepteur a une sortie $C_{OL}$ reliée à l'entrée de commande du commutateur associé pour l'alimentation des mélangeurs correpondants par les signaux d'oscillation locale associés aux cellules sélectionnées. Les deux branches de diversité sont commandées de la même manière. Ainsi, à un instant donné, les signaux transmis par les circuits $200_a$ et $200_b$ à un émetteur récepteur $ER_j$ sont les signaux reçus par les deux antennes $i_a$ et $i_b$ couvrant le même secteur.

Ainsi, en reprenant l'exemple illustré les figures 4 et 5, l'émetteur récepteur $ER_1$ accordé sur le canal $F_1$ est alimenté par un signal provenant de la cellule 1 fourni par les antennes $1_a$ ou $1_b$ par sélection de la fréquence d'oscillation locale $OL_1$ par le commutateur 91. De même l'émetteur récepteur $ER_2$ accordé sur le canal $F_2$ est alimenté par un signal provenant de la cellule 4, fourni par les antennes $4_a$ ou $4_b$, par sélection de la fréquence d'oscillation $OL_4$ par le commutateur 92.

Le récepteur $ER_j$ fonctionne alors de manière classique en diversité réelle, le choix de l'un ou l'autre signal étant effectué à tout moment par détection du signal de plus fort niveau.

En cas de défaillance du circuit de sélection, ou pour des systèmes de plus faible prix, chaque émetteur récepteur peut lui-même commander un balayage des différents secteurs pour déterminer rapidement sur quelles antennes les signaux reçus dans son canal est le plus élevé et se caler alors sur ce secteur. Ce balayage se fait par le commutateur des signaux d'oscillation locale et chaque émetteur récepteur comporte un circuit de mesure de niveau.

Comme indiqué ci-dessus, dans le mode de réalisation représenté, le système travaille en diversité réelle, et il a été prévu d'utiliser deux circuits de multiplexage indépendants dans les circuits associés aux antennes, et deux circuits de sélection indépendants pour le choix des secteurs d'antennes en réception associés aux deux branches de diversité. Ainsi en cas de défaillance de l'un de ces circuits, la station perd une branche de diversité mais continue à fonctionner sur l'autre. Le système présente alors avec de moins bonnes performances mais fonctionne toujour.

L'invention n'est pas limitée au mode de réalisation décrit et représenté. En particulier, il n'est pas nécessaire que le signal soit transposé, dans les circuits 200, à la fréquence initiale. Tous les signaux reçus peuvent être transposés dans une bande différente. Dans ce cas les différentes fréquences d'oscillation locale utilisées dans le démultiplexeur sont espacées de la même manière que celles utilisées dans le multiplexeur mais sont réparties dans une autre bande de fréquences.

Il faudra alors disposer d'oscillateurs locaux dans les circuits associés aux antennes différents de ceux utilisés dans les circuits de réception.

De plus, comme il a été indiqué ci-dessus du fait de l'indépendance des deux branches de diversité, les fréquences de transposition ont été choisies identiques pour les signaux provenant des deux antennes d'un même secteur.

Mais, comme indiqué ci-dessus, il est tout à fait possible de traiter tous les signaux ensemble en choisissant autant de fréquences de transposition qu'il y a d'antennes et non plus de paires d'antennes, soit 16 dans l'exemple ci-dessus. Un seul câble de descente peut alors être utilisé, et dans les circuits de réception un seul filtre 30 ayant une bande suffisante, associé à un amplificateur 40 et à un circuit séparateur 50 à 16 + 1 sorties.

Par ailleurs, si les bandes de transposition des signaux provenant des antennes de la première branche de diversité et celles des signaux provenant de la seconde branche de diversité ne sont pas intercalées et forment deux sous-bandes, il est possible d'utiliser, dans les circuits de réception, deux filtres 30(a) et 30(b) qui auront la même largeur de bande, soit 300 MHz en reprenant l'exemple ci-dessus, mais des bandes adjacentes.

Enfin, il est possible dans un système où tous les récepteurs seraient multicanaux, chacun comportant du circuit de mesure de la puissance reçue, d'utiliser l'un quelconque des récepteurs comme récepteur de mesure. Un tel arrangement peut même être associé à celui décrit ci-dessus. Ce qui permet alors d'utiliser n'importe quel récepteur d'un quelconque des émetteurs-récepteurs en récepteur de mesure en cas de panne du récepteur de mesure «principal».

**Revendications**

1. Système d'antenne électronique pour réseau cellulaire de radiotéléphones associant des stations fixes à des postes mobiles ou portatifs, comportant
   - des antennes de réception réalisant une sectorisation de l'espace à couvrir,

– au moins un câble de descente $(20_a)$,
– et des circuits de réception
caractérisé en ce qu'il comprend:
– au moins un ensemble d'antennes de réception $(1_a \dots 8_a)$,
– et, à proximité des antennes, au moins un circuit de transposition et de multiplexage en fréquence (100), pour transposer les signaux reçus par les différentes antennes de l'ensemble de la bande de fréquences radio à des sous-bandes de fréquences qui ne se recouvrent pas, et les combiner, le câble de descente $(20_a)$ reliant la sortie du circuit de transposition et de multiplexage (100) à ces circuits de réception,
– et, dans ces circuits de réception un ensemble de récepteurs $(ER_l \dots ER_m)$ associés aux différentes fréquences de réception dans la bande radio $F_j$, $j = l$ à $m$, un récepteur de mesure $R_o$, au moins un circuit de démultiplexage et de transposition (200) reliant l'extrémité du câble aux entrées des récepteurs, au moins un circuit de commande (300) pour la sélection à partir de mesures effectuées dans le récepteur de mesure $R_o$, pour chaque fréquence de réception $F_j$, de la sous-bande transposée dans laquelle le signal est de plus fort niveau, chaque récepteur étant alors relié à une sortie du circuit de démultiplexage et de transposition (200) délivrant un signal issu de la sous-bande correspondante, pour le transposer et le traiter.

2. Système selon la revendication 1, caractérisé en ce qu'il comporte:
– deux ensembles d'antennes de réception $(1_a \dots 8_a; 1_b \dots 8_b)$ réalisant tous deux la même sectorisation de l'espace, deux circuits de transposition et de multiplexage (100) en fréquence respectivement associés aux deux ensembles d'antennes, les mêmes sous-bandes de fréquences étant utilisées pour la transposition des signaux issus de deux antennes couvrant le même secteur,
– deux câbles de descente $(20_a, 20_b)$ pour transmettre les deux signaux multiplexés délivrés par les sorties de ces circuits de transposition et de multiplexage,
et, dans les circuits de réception, deux circuits de multiplexage et de transposition $(200_a, 200_b)$ reliant les extrémités des deux câbles aux entrées des récepteurs, et le circuit de commande (300) pour la sélection dans chacun des signaux multiplexés et pour chaque fréquence de réception, d'une sous-bande transposée dans laquelle le signal à cette fréquence de réception a le plus haut niveau, chaque récepteur ayant deux entrées reliées aux sorties de deux circuits de démultiplexage et de transposition $(200_a, 200_b)$ sélectionnant les sous-bandes correspondantes associées à un même secteur d'antennes pour fonctionner en diversité.

3. Système selon la revendication 1, caractérisé en ce qu'il comporte:
– deux ensembles d'antennes de réception $(1_a \dots 8_a; 1_b \dots 8_b)$ réalisant tous deux la même sectorisation de l'espace, un circuit de transposition et de multiplexage (100) pour transposer et combiner les signaux reçus des deux ensembles d'antennes, et former un signal multiplexé,
– un seul câble de descente reliant la sortie de ce circuit (100) aux circuits de réception,
– et en ce que, dans les circuits de réception chaque récepteur a deux entrées reliées à deux sorties du circuit de démultiplexage et de transposition sélectionnant deux sous-bandes pour fonctionner en diversité, le circuit de commande (300) sélectionnant pour chaque fréquence de réception les deux sous-bandes transposées dans le signal multiplexé associées à un même secteur d'antennes dans lesquelles les composantes à cette fréquence de réception ont les plus fort niveaux.

4. Système selon l'une des revendications 1 à 3, caractérisé en ce que les sous-bandes transposées par le circuit de transposition et de multiplexage (100) ont des fréquences inférieures à celles de la bande radio du réseau.

5. Système selon l'une quelconque des revendications 1 à 4, caractérisé en ce que le circuit de transposition et de multiplexage (100) et le circuit de démultiplexage et de transposition (200) utilisent un même ensemble de fréquences de transposition, les circuits de réception comportant un générateur de ces fréquences $(OL_1, OL_2 \dots OL_8)$ et un circuit de combinaison (10), un câble de transmission (49) reliant la sortie du circuit de combinaison (10) à l'entrée d'un circuit de séparation constitué de filtres (41 ... 48) situé à proximité des antennes pour alimenter des mélangeurs $(31_a \dots 31_b)$ du circuit de transposition et de multiplexage (100).

6. Système selon la revendication 1, caractérisé en ce que les récepteurs sont banalisés et sont reliés par un bus de liaison $(C_a)$ assurant la transmission des informations entre les récepteurs, chaque récepteur comportant un processeur de commande, l'un quelconque des récepteurs pouvant être utilisé en récepteur de mesure de secours en cas de panne du récepteur de mesure $(R_o)$.

**Patentansprüche**

1. Elektronisches Antennensystem für ein zelluläres Funktelefonnetz, das ortsfeste Stationen mobilen oder tragbaren Stationen zuordnet,
– mit Empfangsantennen, die eine Sektoraufteilung des zu überdeckenden Raums vornehmen,
– mit mindestens einem Antennenzuführungskabel $(20_a)$,
– und mit Empfangskreisen,
dadurch gekennzeichnet, dass es enthält:
– mindestens eine Empfangsantenneneinheit $(1_a \dots 8_a)$,
– und in der Nähe der Antennen mindestens einen Frequenzumsetzer- und Multiplexierkreis (100), um die von den verschiedenen Antennen der Einheit empfangenen Signale von der Funkfrequenz auf sich nicht überdeckende Unterfrequenzbänder umzusetzen und zu kombinieren, wobei das Antennenzuführungskabel $(20_a)$ den Ausgang des Umsetzer- und Multiplexierkreises (100) mit diesen Empfangskreisen verbindet,
– und, in diesen Empfangskreisen, eine Einheit von Empfängern ($ER_l ... ER_m$), die den verschiedenen Empfangsfrequenzen im Funkfrequenzband $F_j$ zugeordnet sind, wobei j = l bis m ist, einen Messempfänger $R_o$, mindestens einen Demultiplexier- und Umsetzungskreis (200), der das Ende des Kabels an die Eingänge der Empfänger anschliesst, mindestens einen Steuerkreis (300) für die Auswahl desjenigen umgesetzten Unterbandes, in dem das Signal am stärksten ist, abhängig von der im Messempfänger $R_o$, durchgeführten Messung für jede Empfangsfrequenz $F_j$, wobei jeder Empfänger dann an den Ausgang des Demultiplexier- und Umsetzungskreises (200) angeschlossen ist, der ein aus dem entsprechenden Unterband kommendes Signal liefert, um dieses umzusetzen und zu verarbeiten.

2. System nach Anspruch 1, dadurch gekennzeichnet, dass es aufweist:
– zwei Empfangsantenneneinheiten ($1_a ... 8_a$; $1_b ... 8_b$), die beide dieselbe Sektoraufteilung des Raums vornehmen, zwei Frequenzumsetzungs- und Multiplexierkreise (100), die je einer der Antenneneinheiten zugeordnet sind, wobei dieselben Frequenzunterbänder für die Umsetzung der von den beiden denselben Sektor überdeckenden Antennen kommenden Signale verwendet werden,
– zwei Antennenzuführungskabel ($20_a$, $20_b$) für die Übertragung der beiden multiplexierten Signale, die von den Ausgängen der Umsetzungs- und Multiplexierkreise geliefert werden,
– und, in den Empfangskreisen, zwei Multiplexier- und Umsetzungskreise ($200_a$, $200_b$), die die Enden der beiden Kabel an die Eingänge der Empfänger anschliessen, und den Steuerkreis (300) für die Auswahl eines umgesetzten Unterbandes, in dem das Signal bei dieser Empfangsfrequenz am stärksten ist, und zwar in jedem der multiplexierten Signale und für jede Empfangsfrequenz, wobei jeder Empfänger zwei Eingänge besitzt, die an die Ausgänge der beiden Demultiplexier- und Umsetzungskreise ($200_a$, $200_b$) angeschlossen sind, die die entsprechenden einem gemeinsamen Antennensektor zugeordneten Subbänder auswählen, um im Diversity-Modus zu arbeiten.

3. System nach Anspruch 1, dadurch gekennzeichnet, dass es aufweist:
– zwei Empfangsantenneneinheiten ($1_a ... 8_a$; $1_b ... 8_b$), die beide dieselbe Sektoraufteilung des Raums vornehmen, einen Umsetzungs- und Multiplexierkreis (100), um die von den beiden Antenneneinheiten emfangenen Signale umzusetzen und zu kombinieren und um ein multiplexiertes Signal zu bilden,
– wobei ein einziges Antennenzuführungskabel den Ausgang dieses Kreises (100) mit den Empfangskreisen verbindet,
– und dass in den Empfangskreisen jeder Empfänger zwei Eingänge besitzt, die an zwei Ausgänge des Demultiplexier- und Umsetzungskreises angeschlossen sind, um zwei Unterbänder zum Betrieb im Diversity-Modus auszuwählen, wobei der Steuerkreis (300) für jede Empfangsfrequenz die beiden umgesetzten Unterbänder im multiplexierten Signal auswählt, die einem gemeinsamen Antennensektor, in dem die Komponenten dieser Empfangsfrequenz am stärksten sind, zugeordnet sind.

4. System nach einem der Ansprüche 1 bis 3, dadurch gekennzeichnet, dass die durch den Umsetzungs- und Multiplexierkreis (100) umgesetzten Unterbänder niedrigere Frequenzen als das Funkfrequenzband des Netzes besitzen.

5. System nach einem beliebigen der Ansprüche 1 bis 4, dadurch gekennzeichnet, dass der Umsetzungs- und Multiplexierkreis (100) und der Demultiplexier- und Umsetzungskreis (200) denselben Satz von Umsetzungsfrequenzen verwenden, dass die Empfangskreise einen Generator zur Erzeugung dieser Frequenzen ($OL_1$, $OL_2 ... OL_8$) und einen Verknüpfungskreis (10) besitzen, wobei ein Übertragungskabel (49) den Ausgang des Verknüpfungskreises (10) mit dem Eingang eines Trennkreises verbindet, der aus Filtern (41 ... 48) besteht und in der Nähe der Antennen liegt, um Mischstufen ($31_a ... 31_b$) des Umsetzungs- und Multiplexierkreises (100) zu speisen.

6. System nach Anspruch 1, dadurch gekennzeichnet, dass die Empfänger nicht fest zugeordnet sind und über eine Verbindungsschiene ($C_a$) verbunden sind, die die Informationsübertragung zwischen den Empfängern sicherstellt, wobei jeder Empfänger einen Steuerprozessor besitzt und jeder beliebige Empfänger als Ersatzmessempfänger bei Ausfall des Messempfängers ($R_o$) verwendet werden kann.

## Claims

1. An electronic antenna system for a cellular radio telephone network associating stationary stations to mobile or portable stations, this system comprising
– reception antennas performing a sectorisation of the space to be covered,
– at least one antenna access cable ($20_a$),
– and reception circuits,
characterized in that it comprises:
– at least one array of reception antennas ($1_a ... 8_a$),
– and, close to the antennas, at least one frequency transposition and multiplexing circuit (100) for transposing the signals received by the different antennas of the array in the radio frequency band to mutually distinct frequency subbands, and for combining them, the antenna access cable ($20_a$) connecting the output of the transposition and multiplexing circuit (100) to these reception circuits,
– and, in these reception circuits, a set of receivers ($ER_l ... ER_m$) associated to the different reception frequencies in the radio frequency band $F_j$, j = l to m, a measuring receiver $R_o$, at least one demultiplexing and transposition circuit (200) connecting the terminal of the cable to the inputs of the receivers, at least one control circuit (300) for the selection of the transposed subband in which the signal has the highest level, on the basis of the values measured by the measuring receiver $R_0$ and for each reception frequency $F_j$, each receiver being further connected to the output of the demultiplexing and transposition circuit (200) supplying a signal coming from the corresponding subband for transposing and processing it.

2. A system according to claim 1, characterized in that it comprises:
– two reception atenna arrays ( ($1_a \ldots 8_a$; $1_b \ldots 8_b$), both performing the same sectorisation of the space, two frequency transposition and multiplexing circuits (100) associated respectively to the two antenna arrays, the same subbands of frequencies being used for the transposition of the signals delivered by two antennas covering the same sector,
– two antenna access cables ($20_a$, $20_b$) for transmitting the two multiplexed signals delivered by the outputs of the transposition and multiplexing circuit,
– and, in the reception circuits, two multiplexing and transposition circuits ($200_a$, $200_b$) connecting the terminals of the two cables to the inputs of the receivers, and the control circuit (300) for the selection, in each of the multiplexed signals and for each reception frequency, of one transposed subband in which the signal at this reception frequency has the highest level, each receiver having two inputs connected to the outputs of two demultiplexing and transposition circuits ($200_a$, $200_b$) which select the corresponding subbands associated to one antenna sector in order to be operated at diversity.

3. A system according to claim 1, characterized in that it comprises:
– two reception antenna arrays ($1_a \ldots 8_a$, $1_b \ldots 8_b$), both performing the same sectorisation of the space, a transposition and multiplexing circuit (100) for transposing and combining the signals received from the two antenna arrrays and for forming a multiplexed signal,
– only one antenna access cable connecting the output of this circuit to the reception circuit,
– and that in the reception circuit, each receiver has two inputs connected to two outputs of the demultiplexing and transposition circuit selecting two subbands for operating at diversity, the control circuit (300) selecting for each reception frequency the two transposed subbands in the multiplexed signal which are associated to one antenna sector and in which the components of this reception frequency have the highest level.

4. A system according to one of claims 1 to 3, characterized in that the subbands transposed by the transposition and multiplexing circuit (100) operate at frequencies below the frequencies of the network radio band.

5. A system according to any one of claims 1 to 4, characterized in that the transposition and multiplexing circuit (100) and the demultiplexing and transposition circuit (200) use the same transposition frequency set, the reception circuits comprising a generator of these frequencies ($OL_1$, $OL_2$ ... $OL_8$) and a combination circuit (10), a transmission cable (49) connecting the output of the combination circuit (10) to the input of a separation circuit constituted by filters (41 ... 48), this circuit being situated close to the antennas for feeding mixing stages ($31_a \ldots 31_b$) of the transposition and multiplexing circuit (100).

6. A system according to claim 1, characterized in that the receivers are generalized and are interconnected by a connection bus ($C_a$) for ensuring the information transmission between the receivers, each receiver comprising a control processor, any one of the receivers being able to be used as emergency measuring receiver in the case of malfunction of the measuring receiver ($R_0$).

Fig.1

Fig.7

Fig.2

Fig.3

Fig.4

Fig.5

15

## Fig.6

# Fig.8